## Europäisches Patentamt
## European Patent Office
## Office européen des brevets

(19)

(11) Numéro de publication : **0 208 092**
**B1**

(12)

# FASCICULE DE BREVET EUROPÉEN

(45) Date de publication du fascicule du brevet :
20.09.89

(51) Int. Cl.⁴ : **A 47 F   1/10**, A 47 J  31/40

(21) Numéro de dépôt : 86106642.1

(22) Date de dépôt : 15.05.86

(54) Dispositif pour la distribution de cartouches dans un porte-cartouches pour machine à café.

(30) Priorité : 28.06.85 CH 2768/85

(43) Date de publication de la demande :
14.01.87 Bulletin 87/03

(45) Mention de la délivrance du brevet :
20.09.89 Bulletin 89/38

(84) Etats contractants désignés :
AT BE CH DE FR GB IT LI LU NL SE

(56) Documents cités :
CH-A- 137 345
CH-A- 483 680
US-A- 2 696 329

(73) Titulaire : SOCIETE DES PRODUITS NESTLE S.A.
Case postale 353
CH-1800 Vevey (CH)

(72) Inventeur : Bäni, Heinz
Les Granges
CH-1607 Granges (CH)
Inventeur : Jaquier, Roger
La Tourelle
CH-1605 Chexbres (CH)

Jouve, 18, rue St-Denis, 75001 Paris, France

## Description

L'invention concerne un dispositif de distribution de cartouches, prévues pour la confection d'une boisson, dans un porte-cartouches pour machine à café.

Les cartouches pour la confection de boissons plus particulièrement le café, sont déjà connues et deviennent, à l'heure actuelle, de plus en plus attractives, notamment dans les cafés et restaurants, car elles sont directement prêtes à l'usage et suppriment ainsi toute manipulation de la part de l'usager. Ces cartouches, par exemple celles faisant l'objet du brevet CH-A-605'293, sont à placer dans un logement prévu à cet effet du porte-cartouches de la machine à café. Ledit porte-cartouches est ensuite placé sur la machine à café proprement dite, de manière à confectionner la boisson souhaitée. Le dispositif, objet de la présente invention, permet de délivrer les cartouches une à une directement de leur emballage dans le porte-cartouches de la machine à café, sans que l'utilisateur ait besoin de les toucher. On élimine ainsi tout risque de détérioration lesdites cartouches ainsi qu'un mauvais positionnement dans le porte-cartouches.

L'invention concerne un dispositif de distribution de cartouches, prévues pour la confection d'une boisson, dans un porte-cartouches pour machine à café, comprenant un canal sensiblement vertical d'arrivée desdites cartouches, un levier à ressort avec un axe horizontal disposé sensiblement derrière ou sous le canal d'arrivée et comportant un système de retenue double, chaque système de retenue étant disposé de part et d'autre de l'axe dudit levier se prolongeant en un moyen pour coopérer avec le porte-cartouches, la fonction du premier système de retenue étant d'arrêter et ensuite de libérer la cartouche qui doit tomber dans le porte-cartouches et celle du second système de retenue étant d'empêcher la seconde cartouche de tomber pendant le chargement de la première dans ledit porte-cartouches et des moyens assurant le positionnement correct dans le porte-cartouches.

Le dispositif, objet de la présente invention, est en quelque sorte complémentaire d'une machine à café, de sorte qu'il est préférable de le prévoir intégré ou à côté de la machine à café. On peut également envisager un dispositif par type de café, de consommation courante. Pour charger le porte-cartouches, on opère de la manière suivante : on introduit dans le canal d'arrivée le bout carré ou rectangulaire de l'emballage ouvert, qui est un étui en carton ou tout autre système d'emballage équivalent. Les cartouches sont disposées dans l'emballage soit côte à côte, soit tête-bêche. Les premières cartouches tombent dans ce canal et sont stoppées par le système de retenue. On engage alors, sur la partie inférieure du dispositif, le porte-cartouches qui repousse ou descend le levier et dégage la première cartouche qui tombe, bascule de 90° environ et arrive correctement positionnée dans le porte-cartouches. Par correctement positionnée, on entend dans la présente description, par exemple dans le cas où on utilise une cartouche conforme au brevet CH-A-605'293 précité, que la cartouche lorsqu'elle est en position dans le porte-cartouches doit avoir son opercule en regard vers le bas car c'est par cet opercule que doit s'écouler la boisson. La position correcte de la cartouche apparaîtra mieux en référence aux figures. Lorsqu'on retire le porte-cartouches, la cartouche suivante dans le canal d'arrivée vient se positionner contre le système de retenue. Le dispositif est prêt pour une nouvelle distribution.

Dans une première forme de réalisation du dispositif selon l'invention, les moyens assurant le positionnement correct dans le porte-cartouches comprennent un canal de distribution dans le prolongement du canal vertical d'arrivée, élargi par rapport à celui-ci et débouchant dans une cavité propre à recevoir le porte-cartouches, le levier à ressort se prolongeant jusqu'à ladite cavité et un étrier fixe disposé horizontalement dans le canal de distribution.

La fonction du premier système de retenue est d'arrêter et ensuite de libérer la cartouche qui doit tomber dans le porte-cartouches et celle du second système de retenue est d'empêcher la seconde cartouche de tomber pendant le chargement de la première dans ledit porte-cartouches.

Le levier comporte deux branches dans la zone du canal de distribution. L'étrier est disposé à ce niveau entre ces deux branches. La fonction de l'étrier est de faire basculer de 90° environ la cartouche lors de sa chute pour qu'elle se mette en bonne position avant son arrivée dans le porte-cartouches. L'étrier comporte en outre de manière avantageuse une languette souple permettant de limiter le basculement de la cartouche lors de sa chute.

En ce qui concerne maintenant les dimensions du dispositif selon l'invention, les canaux d'arrivée et de distribution ont une profondeur sensiblement égale au diamètre des cartouches, le canal d'arrivée a une largeur sensiblement égale à la hauteur des cartouches et le canal de distribution une largeur maximale sensiblement égale au double de la hauteur des cartouches.

Dans une seconde forme de réalisation du dispositif selon l'invention, les moyens assurant le positionnement correct dans le porte-cartouches comprennent un canal de distribution dans le prolongement du canal vertical d'arrivée et incliné par rapport à l'horizontale, le levier à ressort se prolongeant jusqu'à la sortie du canal de distribution. Le canal de distribution fait normalement un angle compris entre 5 et 30° avec l'horizontale. Le levier à ressort comporte deux bras de levier sensiblement perpendiculaires, chaque bras comportant un système de retenue, l'un dans le canal d'arrivée, l'autre dans le canal de distribution.

En ce qui concerne les dimensions, le canal d'arrivée a une profondeur sensiblement égale au diamètre des cartouches, les canaux d'arrivée et de distribution ont une largeur sensiblement égale à la hauteur des cartouches et le canal de distribution a une longueur sensiblement égale à trois fois le diamètre des cartouches.

Dans une forme de réalisation particulièrement avantageuse, on prévoit un système automatique d'alimentation de l'emballage dans le canal d'arrivée, par exemple à l'aide d'un système connu à poussoir à ressort. On dispose ainsi de plusieurs emballages ouverts contenant les cartouches derrière le canal d'arrivée et parallèlement à l'axe du levier à ressort. Le système à poussoir amène alors le premier emballage au-dessus du canal d'arrivée. On se sert en cartouches, jusqu'à ce que ce premier emballage soit vide, on le retire alors et le système à poussoir amène le second emballage au-dessus du canal d'arrivée. On continue ensuite à se servir jusqu'à épuisement de tous les emballages et on réapprovisionne finalement en nombre d'emballages prévus dans le magasin correspondant. On assure ainsi au dispositif selon l'invention une bonne autonomie de fonctionnement.

Même si le dispositif ne comporte pas de système d'alimentation automatique, il comprend dans ce cas des compartiments de stockage d'emballages porteurs de cartouches derrière le canal d'arrivée.

La suite de la description est faite en référence aux dessins sur lesquels :

Fig. 1 représente une vue de face du dispositif selon l'invention dans une première forme

Fig. 2 représente une coupe selon la ligne x-x de la fig. 1

Fig. 3 représente une vue de face du dispositif selon l'invention dans une seconde forme de réalisation et

Fig. 4 représente une coupe selon la ligne y-y de la fig. 3.

. Le dispositif (1) comprend un canal d'arrivée (2), un canal de distribution (3) et une cavité (4) propre à recevoir un porte-cartouches dont on a représenté le contour extérieur. Le levier (5) intégré dans les canaux précités pivote autour de son axe (6) et appuie par la réaction du ressort (7) contre une butée (8). Ce levier présente un système de retenue double (10, 11) ayant la forme d'un prisme triangulaire et à sa partie inférieure un téton (9) contre lequel va s'appuyer le porte-cartouches. Finalement, le levier (5) présente deux branches (13) et (4) entre lesquelles est disposé l'étrier fixe (12).

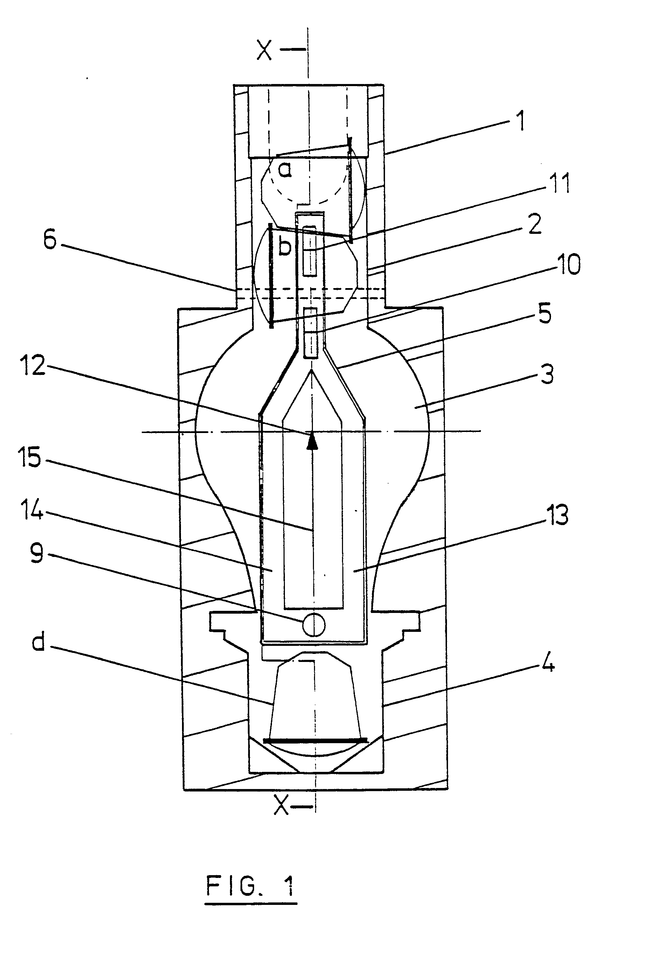

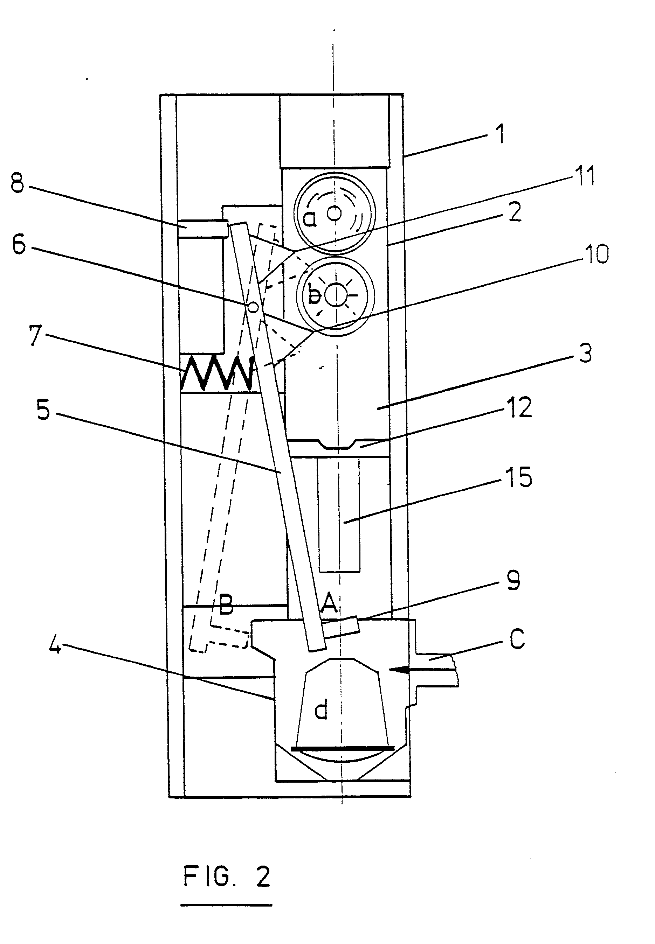

Le système fonctionne de la manière suivante : on engage à la partie supérieure du canal d'arrivée (2) le bout ouvert de l'étui carton (non représenté) contenant les cartouches disposées tête-bêche. On a représenté les deux premières cartouches (b) et (a) de cet étui. La cartouche (b) appuie sur le système de retenue (10) et la cartouche (a) appuie sur la cartouche (b). Lorsqu'on souhaite dégager la cartouche (b), on introduit dans le sens de la flèche C dans la cavité (4) le porte-cartouches. Celui-ci pousse le levier (5) par la butée (9) de la position A à la position B (Fig. 2). Le ressort (7) se trouve ainsi comprimé, le système de retenue (10) libère la cartouche (b) qui tombe sur l'étrier 12, bascule et se trouve ainsi bien positionnée pour arriver en (d) dans le porte-cartouches. L'étrier comporte de manière avantageuse une languette (15) de manière à limiter le basculement de la cartouche lors de sa chute. Le système de retenue (11) bloque la cartouche (a) lorsque le levier est en position B. On assure donc bien une alimentation unitaire dans le porte-cartouches. Lorsque la cartouche (b) est en position dans le porte-cartouches, on retire ledit porte-cartouches faisant passer le levier (5) de la position B à la position A grâce à la réaction du ressort (7). Le système de retenue (11) libère alors la cartouche (a) qui se déplace d'un cran et est bloquée par le système de retenue (10). Le dispositif est ainsi prêt pour une nouvelle distribution de cartouche. En considérant la Fig. 1, la cartouche (b) passera à gauche de l'étrier dans le canal de distribution et la cartouche (a) à droite de l'étrier, et ainsi de suite pour les cartouches suivantes.

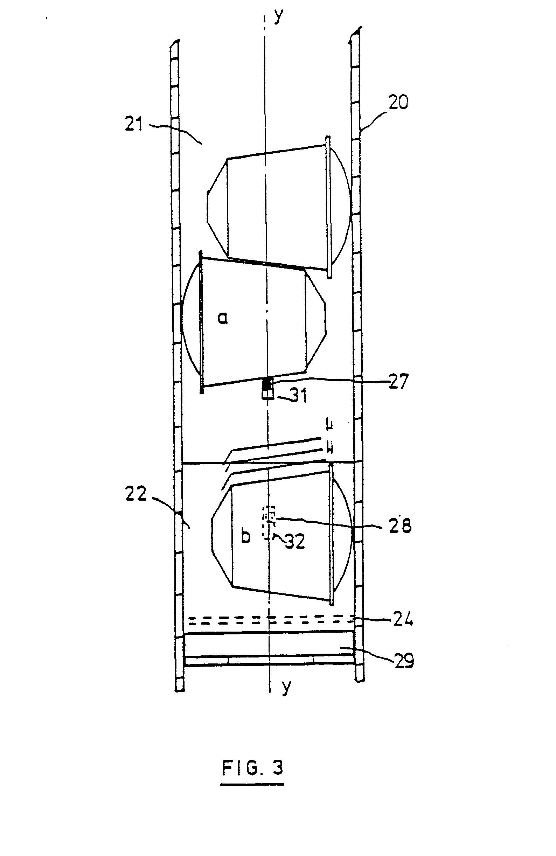

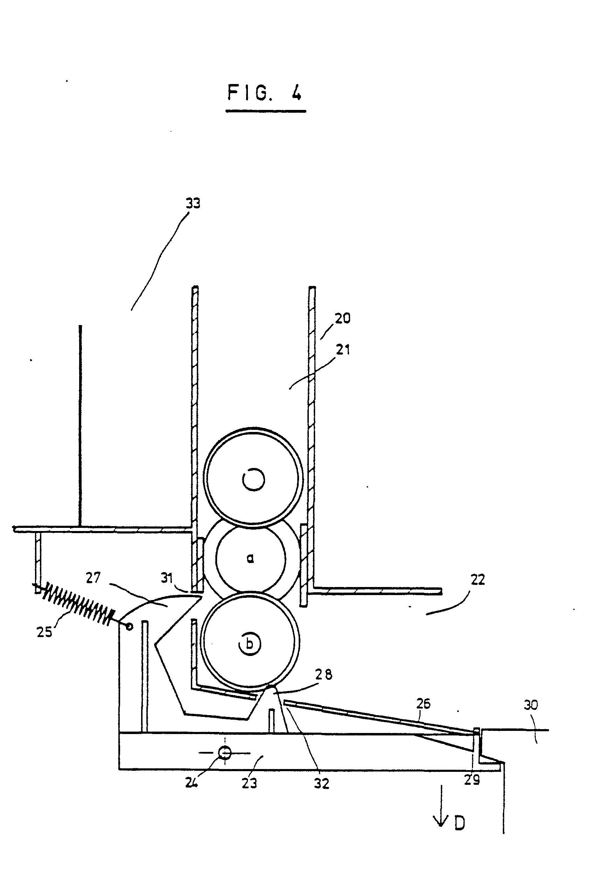

Dans la seconde forme de réalisation des Fig. 3 et 4, le dispositif (20) comprend un canal d'arrivée (21), un canal de distribution (22) et un levier (23) pivotant autour de son axe (24) et appuyant par la réaction du ressort (25) contre la partie inférieure (26) du canal de distribution. Ce levier présente un système de retenue double (27, 28) ayant une forme triangulaire et dans son prolongement un moyen (29) qui coopère avec le porte-cartouches (30). Le système de retenue (27, 28) engage dans les canaux d'arrivée et de distribution par des ouvertures respectives (31, 32). Ce dispositif comporte finalement des compartiments de stockage (33) d'emballages porteurs de cartouches. Ce système fonctionne de la manière suivante : on a représenté les deux premières cartouches (b) et (a). La cartouche (b) appuie sur le système de retenue (28) et la cartouche (a) appuie sur la cartouche (b). Lorsqu'on souhaite dégager la cartouche (b), on amène le porte-cartouches (30) et on appuie avec celui-ci en (29) pour faire pivoter le levier dans le sens de la flèche D.

Le système de retenue (28) libère la cartouche (b) qui roule sur la rampe inclinée du canal de distribution (22) et pivote de 90° en raison de la forme tronconique de la cartouche, pour arriver bien positionnée dans le porte-cartouches. Le système de retenue (27) bloque la cartouche (a) lors de la descente de la cartouche (b). Lorsque la cartouche (b) est en position dans le porte-cartouches (30), on l'enlève, le levier (23) remonte, le système de retenue (27) s'efface et laisse ainsi la cartouche (a) venir buter contre le système de retenue (28). Le dispositif est ainsi prêt pour une nouvelle distribution de cartouche.

Le dispositif selon l'invention permet une distribution sûre et commode de cartouches dans un porte-cartouches de machine à café. Comme déjà mentionné ci-dessus, on distribue de préférence les cartouches, objet du brevet CH-A-605'293. Il est également possible avec le dispositif selon l'invention d'envisager la distribution d'autres types de cartouches. Pour ce faire, il suffit d'adapter en conséquence la dimension des canaux d'arrivée et de distribution ainsi que la position et la forme de l'étrier dans le canal de distribution ou la longueur du canal de distribution.

## Revendications

1. Dispositif de distribution de cartouches (b, a), prévues pour la confection d'une boisson, dans un porte-cartouches pour machine à café, caractérisé en ce qu'il comprend un canal sensiblement vertical d'arrivée (2, 21) desdites cartouches, un levier à ressort (5, 23) avec un axe horizontal (6, 24) disposé sensiblement derrière ou sous le canal d'arrivée et comportant un système de retenue double (10, 11, 27, 28), chaque système de retenue étant disposé de part et d'autre de l'axe dudit levier se prolongeant en un moyen (9, 29) pour coopérer avec le porte-cartouches, la fonction du premier système de retenue (10, 28) étant d'arrêter et ensuite de libérer la cartouche qui doit tomber dans le porte-cartouches et celle du second système de retenue (11, 27) étant d'empêcher la seconde cartouche de tomber pendant le chargement de la première dans ledit porte-cartouches et des moyens (3, 12, 22) assurant le positionnement correct dans le porte-cartouches.

2. Dispositif selon la revendication 1, caractérisé en ce que les moyens assurant le positionnement correct dans le porte-cartouches comprennent un canal de distribution (3) dans le prolongement du canal vertical d'arrivée (2), élargi par rapport à celui-ci et débouchant dans une cavité (4) propre à recevoir le porte-cartouches, le levier à ressort (5) se prolongeant jusqu'à ladite cavité et un étrier fixe (12) disposé horizontalement dans le canal de distribution.

3. Dispositif selon la revendication 1, caractérisé en ce que les moyens assurant le positionnement correct dans le porte-cartouches comprennent un canal de distribution (22) dans le prolongement du canal vertical d'arrivée (21) et incliné par rapport à l'horizontale, le levier à ressort (23) se prolongeant jusqu'à la sortie du canal de distribution.

4. Dispositif selon les revendications 1 et 2, caractérisé en ce que le levier (5) comporte deux branches (13, 14) dans la zone du canal de distribution (3) entre lesquelles est disposé l'étrier fixe (12).

5. Dispositif selon les revendications 1 et 2, caractérisé en ce que les canaux d'arrivée (2) et de distribution (3) ont une profondeur sensiblement égale au diamètre des cartouches, le canal d'arrivée (2) a une largeur sensiblement égale à la hauteur des cartouches et le canal de distribution (3) une largeur maximale sensiblement égale au double de la hauteur des cartouches.

6. Dispositif selon les revendications 1 et 2, caractérisé en ce que l'étrier (12) comporte une languette souple (15).

7. Dispositif selon la revendication 3, caractérisé en ce que le levier à ressort (23) comporte deux bras de levier sensiblement perpendiculaires, chaque bras comportant un système de retenue (27, 28), l'un dans le canal d'arrivée (21), l'autre dans le canal de distribution (22).

8. Dispositif selon l'une des revendications 7 et 3, caractérisé en ce que le canal d'arrivée (21) a une profondeur sensiblement égale au diamètre des cartouches, les canaux d'arrivée (21) et de distribution (22) ont une largeur sensiblement égale à la hauteur des cartouches et le canal de distribution (22) a une longueur sensiblement égale à trois fois le diamètre des cartouches.

9. Dispositif selon l'une des revendications 1 à 8, caractérisé en ce que le canal d'arrivée (2, 21) comporte un système d'alimentation automatique en emballages porteurs de cartouches.

10. Dispositif selon l'une des revendications 1 à 8, caractérisé en ce qu'il comprend des compartiments de stockage (33) d'emballages porteurs de cartouches derrière le canal d'arrivée (21).

## Claims

1. Device for the distribution of cartridges (b, a), intended for the preparation of a beverage in a cartridge holder for a coffee machine, characterized in that it comprises a substantially vertical delivery tube (2, 21) for said cartridges, a spring lever (5, 23) with a horizontal axis (6, 24) arranged substantially behind or below the delivery tube and comprising a double retaining system (10, 11, 27, 28), each retaining system being arranged on either side of the axis of said lever extending into a means (9, 29) for cooperating with the cartridge holder, the function of the first retaining system (10, 28) being to stop and after to release the cartridge which must drop in the cartridge holder and that of the second retaining system (11, 27) being to avoid the second cartridge to drop during the loading of the first in the said cartridge holder and means (3, 12, 22) ensuring a correct positioning in the cartridge holder.

2. Device according to claim 1, characterized in that the means ensuring a correct positioning in the cartridge holder comprise a distribution tube (3) as an extension of the vertical delivery tube (2) which is widened in relation to the delivery tube and which opens into a cavity (4) designed to receive the cartridge holder, the spring lever (5) extending to said cavity and a fixed yoke (12) arranged horizontally in the distribution tube.

3. Device according to Claim 1, characterized in that the means ensuring a correct positioning in the cartridge holder comprise a distribution tube (22) as en extension of the vertical delivery tube (21) and inclined in relation to the horizontal, the spring lever (23) extending to the exit of the distribution tube.

4. Device according to Claims 1 and 2, characterized in that the lever (5) comprises two arms (13, 14) in the zone of the distribution tube (3) between which the fixed yoke (12) is arranged.

5. Device according to Claims 1 and 2, characterized in that the delivery (2) and distribution tubes (3) have a depth substantially equal to the diameter of the cartridges, the delivery tube (2) has a width substantially equal to the height of the cartridges and the distribution tube (3) a maximum width substantially equal to twice the height of the cartridges.

6. Device according to Claims 1 and 2, characterized in that the yoke (12) comprises a flexible tongue (15).

7. Device according to Claim 3, characterized in that the spring lever (23) comprises two substantially perpendicular lever arms, each comprising a retaining system (27, 28) one in the delivery tube (21) and the other in the distribution tube (22).

8. Device according to Claims 3 and 7, characterized in that the delivery tube (21) has a depth substantially equal to the diameter of the cartridges, the delivery (21) and distribution tubes (22) have a width substantially equal to the height of the cartridges and the distribution tube (22) a length substantially equal to three times the diameter of the cartridges.

9. Device according to Claims 1 to 8, characterized in that the delivery tube (2, 21) comprises a system for the automatic supply of cartridge packs.

10. Device according to Claims 1 to 8, characterized in that it comprises storage compartments (33) for cartridge packs behing the delivery tube (21).

## Patentansprüche

1. Vorrichtung zum Abgeben von Kapseln (b, a), die zur Herstellung eines Getränkes bestimmt sind, in einen Kapselträger einer Kaffeemaschine, dadurch gekennzeichnet, daß sie einen im wesentlichen vertikalen Ankunftskanal (2, 21) für die Kapseln aufweist, einen mit einer Feder versehenen Hebel (5, 23) mit horizontaler Achse (6, 24), der im wesentlichen hinter oder unter dem Ankunftskanal liegt und ein doppeltes Haltesystem (10, 11, 27, 28) trägt, wobei jedes der zu beiden Seiten der Achse des Hebels angeordneten Haltesysteme durch eine Einrichtung (9, 29) verlängert ist, um mit dem Kapselträger zusammenzuwirken, wobei die Funktion des ersten Haltesystems (10, 28) darin besteht, die Kapsel, die im Kapselträger herabfallen soll, anzuhalten und sodann freizugeben, und jene des zweiten Haltesystems (11, 27) darin besteht, zu verhindern, daß die zweite Kapsel herabfällt, während die erste Kapsel in den Kapselträger geladen wird, wobei Mittel (3, 12, 22) vorgesehen sind, welche die korrekte Positionierung im Kapselträger sichern.

2. Vorrichtung nach Anspruch 1, dadurch gekennzeichnet, daß die Mittel, welche die korrekte Positionierung im Kapselträger sichern, einen Verteilkanal (3) in Verlängerung des vertikalen Ankunftskanals (2) aufweisen, der bezüglich des letzteren erweitert ist und in einen Hohlraum (4) zur Aufnahme der Kapselträger mündet, wobei der mit einer Feder versehene Hebel (5) bis in den Hohlraum verlängert ist und ein feststehender Bügel (12) horizontal im Verteilkanal angeordnet ist.

3. Vorrichtung nach Anspruch 1, dadurch gekennzeichnet, daß die die korrekte Positionierung im Kapselträger sichernden Mittel einen Verteilkanal (22) aufweisen, der in der Verlängerung des vertikalen Ankunftskanals (21) liegt und bezüglich der Horizontalen geneigt ist, wobei der mit der Feder ausgestattete Hebel (23) bis zum Ausgang des Verteilkanals verlängert ist.

4. Vorrichtung nach den Ansprüchen 1 und 2, dadurch gekennzeichnet, daß der Hebel (5) zwei Arme (13, 14) in der Zone des Verteilkanals (3) aufweist, zwischen denen der feststehende Bügel (12) angeordnet ist.

5. Vorrichtung nach den Ansprüchen 1 und 2, dadurch gekennzeichnet, daß der Ankunftskanal (2) und der Verteilkanal (3) eine Tiefe haben, die im wesentlichen gleich dem Durchmesser der Kapseln ist, wobei der Ankunftskanal (1) eine Breite hat, die im wesentlichen gleich der Höhe der Kapseln ist, und der Verteilkanal (3) eine größte Breite, die im wesentlichen gleich der doppelten Höhe der Kapseln ist.

6. Vorrichtung nach den Ansprüchen 1 und 2, dadurch gekennzeichnet, daß der Bügel (12) eine weiche Zunge (15) aufweist.

7. Vorrichtung nach Anspruch 3, dadurch gekennzeichnet, daß der mit einer Feder versehene Hebel (23) zwei Hebelarme hat, die im wesentlichen senkrecht stehen, wobei jeder Ann ein Haltesystem (27, 28) aufweist, von denen das eine im Ankunftskanal (21) und das andere im Verteilkanal (22) angeordnet ist.

8. Vorrichtung nach den Ansprüchen 7 und 3, dadurch gekennzeichnet, daß der Ankunftskanal (21) eine Tiefe hat, die im wesentlichen gleich dem Durchmesser der Kapseln ist, wobei der Ankunftskanal (21) und der Verteilkanal (22) eine Breite haben, die im wesentlichen gleich der Höhe der Kapseln ist, und der Verteilkanal (22) eine Länge, die im wesentlichen dem dreifachen Durchmesser der Kapseln entspricht.

9. Vorrichtung nach einem der Ansprüche 1 bis 8, dadurch gekennzeichnet, daß der Ankunftskanal (2, 21) ein automatisches Speisesystem für Kapselpackungen aufweist.

10. Vorrichtung nach einem der Ansprüche 1 bis 8, dadurch gekennzeichnet, daß sie hinter dem Ankunftskanal (21) Stapelabteile (33) für die Kapselpackungen aufweist.

FIG. 1

FIG. 2

FIG. 3

# FIG. 4